Europäisches Patentamt

European Patent Office

Office européen des brevets

(11) Publication number : **0 485 191 A2**

# (12) EUROPEAN PATENT APPLICATION

(21) Application number : **91310260.4**

(22) Date of filing : **06.11.91**

(51) Int. Cl.⁵ : **G02F 1/33**

(30) Priority : **09.11.90 GB 9024401**

(43) Date of publication of application :
**13.05.92 Bulletin 92/20**

(84) Designated Contracting States :
**DE FR IT**

(71) Applicant : **GEC-MARCONI LIMITED
The Grove, Warren Lane
Stanmore, Middlesex HA7 4LY (GB)**

(72) Inventor : **Koetser, Harry
43 St. John Avenue
Brentwood, Essex, SM14 5DG (GB)**
Inventor : **Kent, Lionel William John
7 Poppy Green
Springfield, Chelmsford, Essex, CM1 5YD (GB)**

(74) Representative : **Cockayne, Gillian et al
GEC Patent Department, GEC Marconi
Limited, West Hanningfield Road
Great Baddow, Chelmsford Essex CM2 8HN
(GB)**

(54) **Acousto-optic devices.**

(57)     A body (2) of acousto-optic medium has
transducers (31), (32) disposed on two mutually
perpendicular faces. Signals applied to the
transducers cause acoustic waves to be propa-
gated in the medium. A beam of light (100)
passed through the device is diffracted by in-
teraction with the acoustic waves and emerges
as an output beam (102) having a greater di-
vergence than the input beam (100).
     A non-diverging beam (101) may be obtained
by removing the signals.
     The device may be used in a laser apparatus
to adjust the divergence of the output beam.

Fig 3

EP 0 485 191 A2

Jouve, 18, rue Saint-Denis, 75001 PARIS

This invention relates to an acousto-optic device, in particular, but not exclusively, a device suitable for use as a beam diverger.

As is known, lasers produce highly collimated beams of light. It is known to spread such a laser beam by means of a fixed concave spherical or cylindrical lens interposed in the path of the beam. Some applications require laser beams to be switched between non-diverging and diverging modes. This can be implemented by physically inserting a negative lens into the light beam: however, this requires a relatively complex mechanical arrangement and does not allow rapid switching between non-divergent and divergent beams. Moreover the amount of divergence is fixed. The present invention seeks to provide a simplified arrangement suitable for use as a beam diverger.

According to the invention there is provided an acousto-optic device comprising a material which is substantially transmissive to light and means for propagating first and second acoustic signals through the material having wavefronts which are non-parallel to one another and such that the angular divergence of light transmitted through the material is increased by an interaction with the acoustic signals.

The material could be transmissive to only one wavelength of light or over a range of wavelengths, and the light to which the body is transmissive need not be in the visible part of the electromagnetic spectrum but could be, for example, infra-red.

Also the acoustic signals need not be in the audible range but could be any form of signal which involves mechanical vibrations.

An acoustic wave has associated therewith a periodic set of strains in the host medium. These strains, via the photo-elastic effect, set up refractive index perturbations, which are equivalent to a moving phase grating. Light incident on this grating will be diffracted provided the scattering process of the incident optical beam and the acoustic beams is phase matched so as to enable the constructive build up of the diffracted optical beam.

In one preferred embodiment of the invention, the angle between the wavefronts of the first and second acoustic signals is preferably a right angle.

Advantageously, light is transmitted along a path through the material and the material has respective first and second planar surfaces disposed substantially parallel to the light path, the acoustic signals being coupled to the first and second surfaces. The means for propagating the signals may comprise piezo-electric transducers which preferably are mounted on the first and second surfaces.

The device may be used as a beam diverger and utilises the Raman-Nath interaction between the beam of light and the acoustic signals. Other device geometries employing a Bragg acousto-optic interaction process are however possible. The degree of divergence may be adjusted by adjusting the relationship between the acoustic signals, for example by changing the number of frequency components, their relative intensity and/or phase. The degree of divergence may be made different in different radial directions by changing the relationship between the first and second acoustic waves. Either or both the acoustic signals may comprise a plurality of discrete frequencies.

The beam diverger may be used in a laser apparatus which is switchable between a plurality of beam divergences. The apparatus may incorporate a selectively enableable laser amplifier which may be enabled, in conjunction with the beam diverger, to vary the divergence and the power of the output beam simultaneously.

The invention will now be described by way of example with reference to the accompanying drawings in which:

Figure 1 is an explanatory phase matching diagram;

Figure 2 shows in diagrammatic form a beam of light undergoing diffraction in an accousto-optic device;

Figure 3, 4, 5 and 6 schematically show respective embodiments of the invention;

Figures 7, 9 and 11 are contour plots of light intensity produced by an arrangement in accordance with the invention;

Figures 8, 10 and 12 are 3-dimensional angular intensity profiles produced by an arrangement in accordance with the invention;

Figure 13 schematically shows a variable-divergence laser arrangement in accordance with the invention; and

Figure 14 shows a further embodiment of the invention.

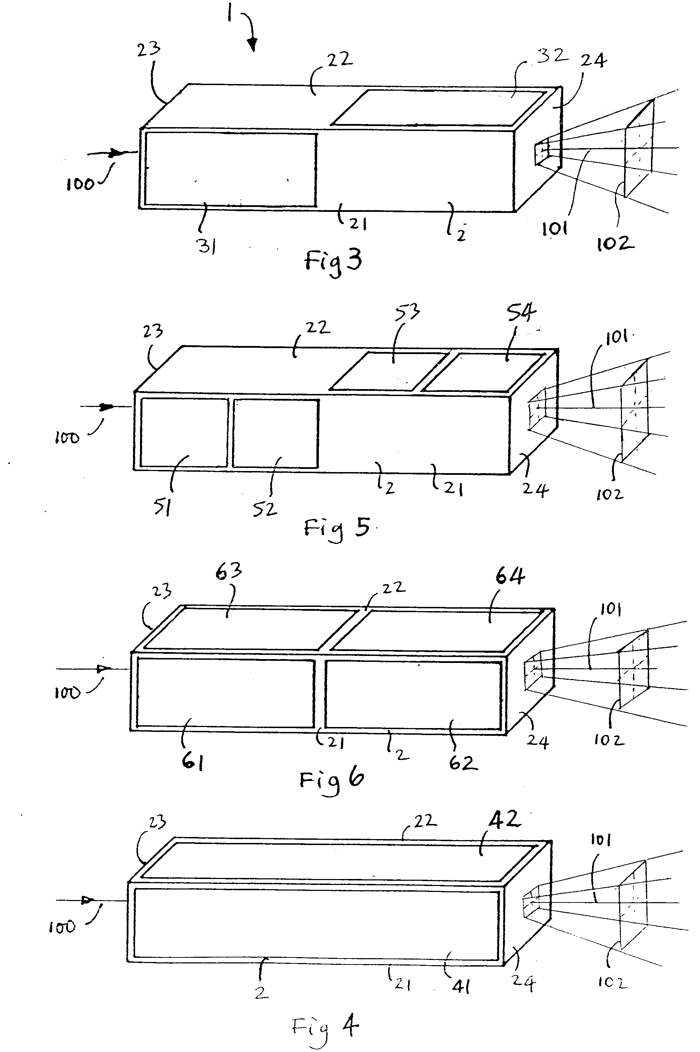

In Figures 3 to 6, corresponding items are designated by the same reference numerals.

An acousto-optical device in accordance with the invention can be used to diffract a beam of light in a plurality of different directions. In each direction the diffraction pattern is produced by the interaction of the beam of light with acoustic signals such that, over a predetermined angular extent, a divergent output beam of light having a larger angular divergence than the input beam of light is produced.

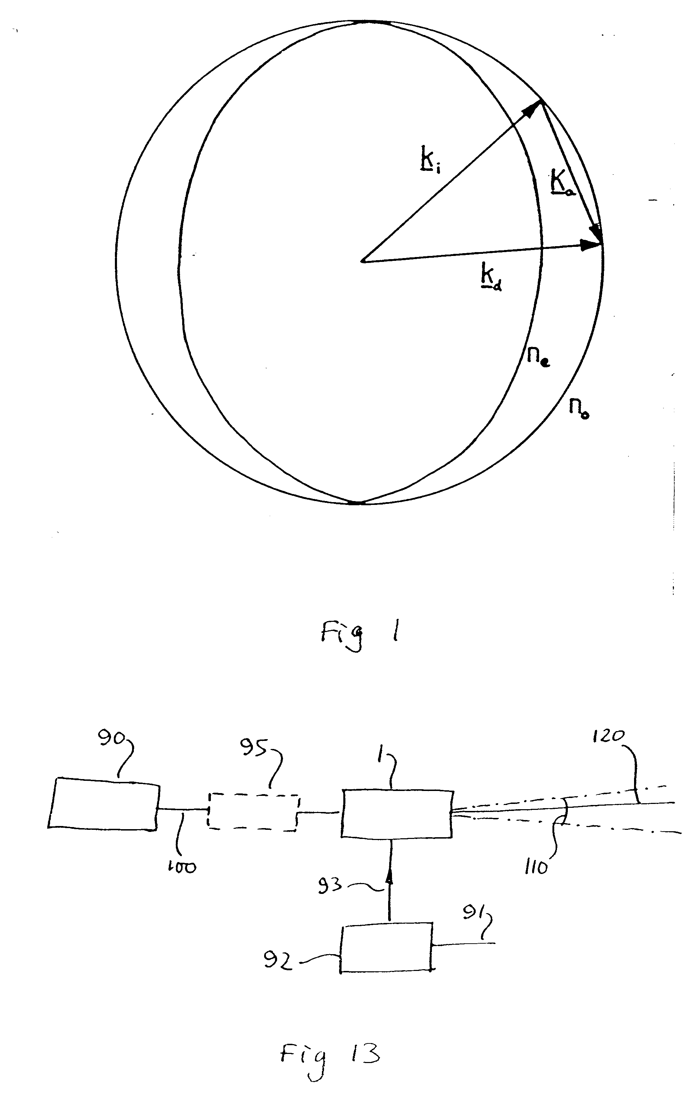

A useful construction for calculating whether an incident beam is diffracted efficiently, is a "phase matching diagram". Figure 1 is an example of such a diagram. In figure 1, the vectors $k_i$, $k_d$, $K_a$ are defined by the relationships

$$k_i = 2 \pi n_o/\lambda$$
$$k_d = 2 \pi n_o/\lambda$$
$$K_a = 2 \pi f/V$$

where

$n_i$ = refractive index as seen by the incident optical beam;

$n_d$ = refractive index as seen by the diffracted optical beam

f = acoustic frequency

V = acoustic velocity

$\lambda$ = optical wavelength

Figure 1 represents the case where $n_i = n_d = n_o$. The length and orientation of the diffracted optical k vector is fixed by momentum conservation of the acoustic and incident optical k vectors. Efficient diffraction only occurs if the diffracted optical k vector lies on a $\frac{2\pi n d}{\lambda}$ k vector surface. As noted above, in figure 1, $n_d = n_o$. Referring to Figure 1, a <u>perfectly</u> collimated wave would only diffract at one well defined frequency determined by the acoustic wavevector length. An angular spread of acoustic K vectors is required for the device to diffract efficiently over a range of frequencies. This angular spread is provided by the acoustic diffraction arising from the finite length of the transducer.

The character of the diffraction pattern is critically dependent on the parameter Q associated with the acousto-optic interaction:-

$$Q = \frac{2\pi\lambda L}{n_i \Lambda^2}$$

where

$\Lambda$ = acoustic wavelength

$\lambda$ = optical wavelength

$n_i$ = refractive index

L = length of acousto-optic interaction, usually taken as equal to the transducer

When Q is much greater than 1, the acousto-optic interaction is in the Bragg regime. Only one significant diffraction order can be observed for a given acoustic frequency. The diffracted optical beam is Doppler shifted.

For small values of Q, eg. when Q is much less than 1, the acousto-optic interaction is in the Raman Nath regime. In this regime the diffraction pattern contains multiple diffraction orders which lie in the plane of the acoustic and incident optical beams. These are spaced periodically in angle, and in general are symmetrical about the zero order beam. The diffracted optical beams are all frequency shifted by a multiple of the acoustic wave frequency f. The positive diffraction orders, which are deflected away from the transducer, are frequency upshifted by nf (n = diffraction order), and the negative diffraction orders are correspondingly frequency down shifted.

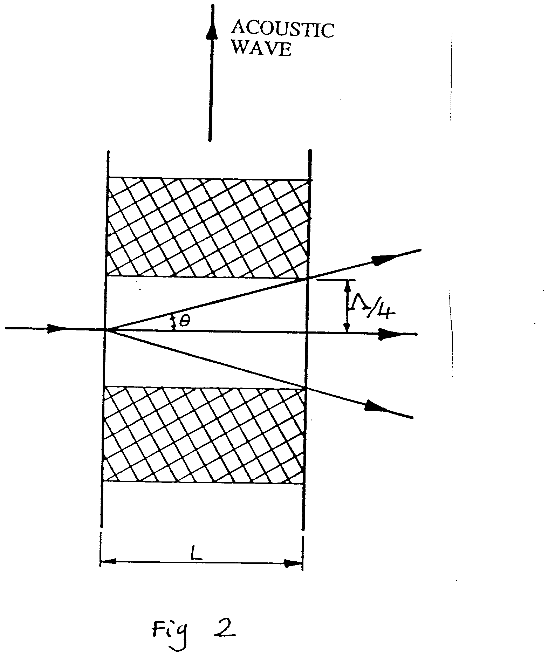

A simple geometric interpretation of Q <<1 is that the spatial separation of the diffracted rays across the interaction region are small compared with the acoustic wavelengths, see Figure 2 for example. Therefore the incident ray and its associated diffracted beams see a fairly constant refractive index perturbation across the interaction region.

For a device operating in the Raman-Nath regime of acousto-optic interaction the diffraction orders are normally symmetrical about the zero order beam. Thus coaxial propagation of the spread and non-spread beam is naturally achieved.

The acoustic and optical beams of a device are preferably approximately orthogonal. While the parameter Q of the device should ideally be small compared with 1, values of Q of up to 2 may be acceptable provided the device does not depend significantly on multiple optical scattering off the phase grating set up by any given acoustic tone.

A single acoustic frequency f1 produces a diffraction pattern having a number of peaks and nulls. A second different acoustic frequency f2 produces a similar diffraction pattern with peaks and nulls located in different positions. By suitable choice of the relative frequencies, the peaks of the one pattern can be made to coincide with the nulls of the other. By ensuring that the device is heavily driven, intermodulation can in effect be made to occur between the frequencies f1 and f2, and the resulting intermodulation products further assist in filling any nulls in the diffraction pattern. Further acoustic frequencies fi may be used to further refine the intensity distribution over the angular extent of the output beam.

By providing a corresponding further set of acoustic beams at frequencies f1′, f2′, oriented at an angle to the first set, an optical beam diverging in a plurality of angular directions can be produced.

By making f1 = f1′ and f2 = f2′, an angularly symmetrical beam of substantially square cross-section is obtained. By altering the relationships between f1 and f1′ and between f2 and f2′, a rectangular output beam of any desired aspect ratio may be obtained. In this case it is preferable to make f1/f1′ = f2/f2′.

In Figure 3 an acousto-optic device 1 comprises a rectangular block 2 of a suitable acousto-optic material, which in this embodiment is $PbMoO_4$. The block has a first end face 23 by which a beam of light 100 from a laser, not shown, enters the device, and a second end face 24 from which emerges either an unmodified beam of light 101 or a beam of light with increased divergence 102. The block has a first face 21 substantially orthogonal to the end faces 23, 24, and a second face 22 substantially orthogonal to the end faces 23, 24 and to the first face 21. The first face 21 has a piezo-electric transducer 31 coupled thereto, the transducer 31 being disposed at the end of the face 21 adjacent to the first end face 23 and extending over substantially the entire width and substantially half the length of the first face 21. The second face 22 has another piezo-electric transducer 32 coupled thereto, the transducer 32 being disposed at the end of the face adjacent to the second end face 24 and extending over substantially the entire width and substantially half the length of the second face.

When an output beam 101 having the same divergence as the input beam is required, the transducers 31, 32 are left unenergised and light passes through the device unmodified.

When an output beam 102 having a wider divergence is required, respective electric signals at frequencies f1, f1′ are applied to the respective transducers 31, 32. These signals cause respective acoustic waves at frequencies at f1, f1′ to be propagated through the block 2 as the beam of light 100 passes under the transducer 31 it is diffracted by the interaction between itself and the acoustic waves produced by transducer 31 to produce an intermediate beam having divergence in a single plane normal to the plane of the first face 21. This intermediate beam now passes under the transducer 32 where it is diffracted by interaction between itself and the acoustic waves produced by the transducer 32, diffraction taking place in a single plane normal to the plane of the second face 22. Thus the beam is caused to diverge over a solid angle of space. The spatial distribution of the divergent light is determined by the relationship between the respective acoustic waves.

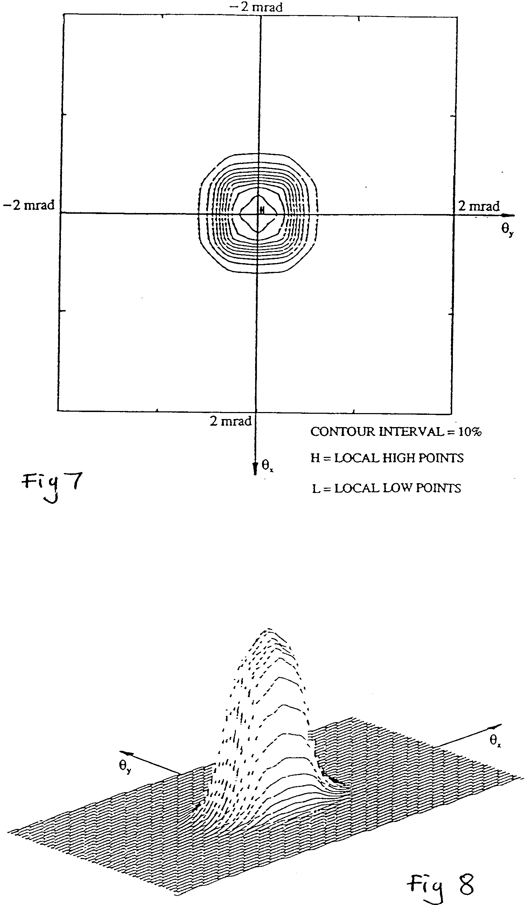

If the frequencies f1, f1′ are the same, then a substantially symmetrical spatial light distribution will be obtained. Figures 7 and 8 show a far field contour plot and angular intensity profile respectively when frequency f1 = frequency f1′. The respective angular centres of the plot and profile correspond to the position of the non-diverging beam 101.

To obtain a wider divergence, a plurality of frequencies can be simultaneously applied to each of the piezo-electric transducers, thereby producing a corresponding plurality of acoustic waves. The number of frequencies used and their inter-relationship can be chosen to yield a light output of desired divergence and spatial light distribution.

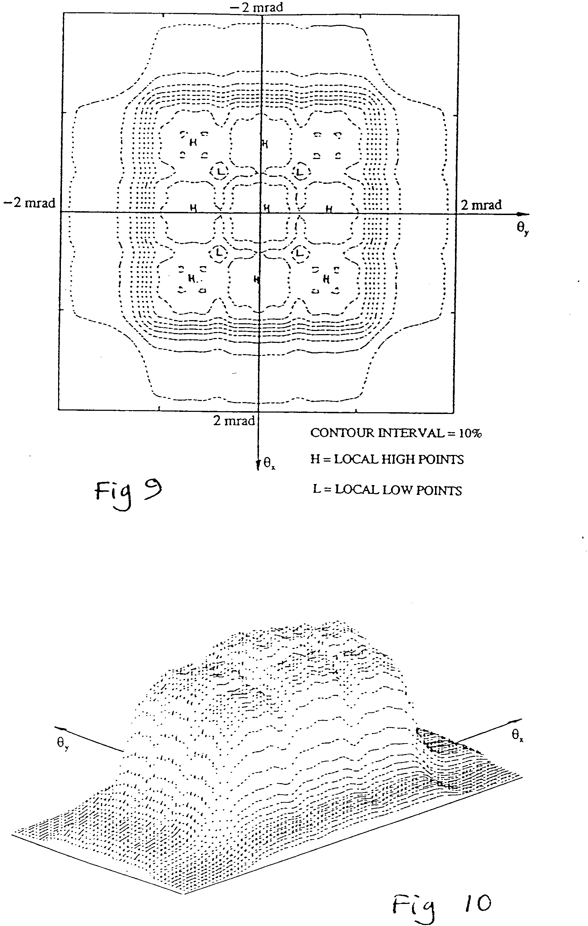

Figures 9 and 10 are to the same scale as Figures 7 and 8 and show a far field contour plot and angular intensity profile respectively for this situation where two frequencies f1 and f2 are simultaneously applied to transducer 31 of figure 3, and two frequencies f1′ and f2′ are applied to transducer 32. The plot is shown for the situation where f1 = f1′ and f2 = f2′. It is seen that a wider divergence is obtained than was the case with figures 7 and 8, and that the cut-off at the edge of the divergent beam is relatively sharp. By driving the device heavily; multiple optical scattering off the different phase gratings set up by the acoustic frequencies will occur. The resulting angles of diffraction are equivalent to scattering off phase gratings that would be produced by intermodulation signals.

By adding additional frequencies, the divergence may be increased further and/or the uniformity of light intensity across the divergent beam modified.

In Figures 7 to 10 the same signals are applied to both transducers to produce a symmetrical light intensity distribution of unity aspect ratio. However, the aspect ratio of the divergent beam may be varied in a simple manner by varying the relationship between the frequencies f1 and f1′. Thus the output beam may be changed from a "letterbox" cross-section aligned in one direction, to a square section, to a letterbox cross-section in a direction perpendicular to the first by suitably varying the relationship between f1 and f1′.

Where a plurality of frequencies f1, f2 etc are used, the same principles apply; however it is preferable to ensure that the frequencies are such that f1/f1′ = f2/f2′ = f3/f3′ etc.

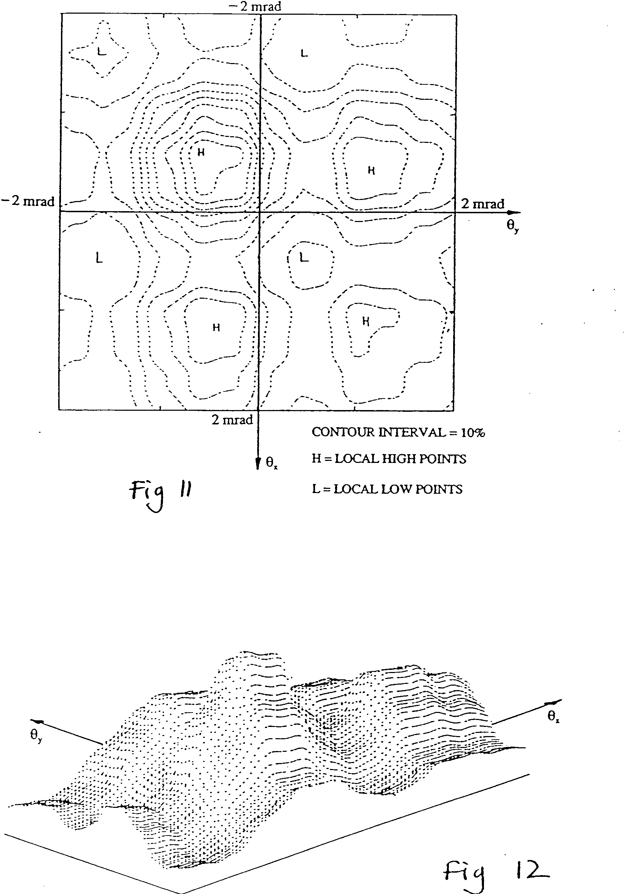

While Figures 7 to 10 depict a symmetrical light intensity centered about the axis of the undiverged beam, it is also possible to produce an asymmetric intensity distribution which is also offset from this axis. Such a situation is shown in Figures 11 and 12 which are to the same respective scale as Figures 7 to 10. Figures 11 and 12 represent the light output for the case where three different frequencies f1 = f1′, f2 = f2′, f3 = f3′ are simultaneously applied to each transducer, and two of the frequencies f2 and f3 are harmonically related to each other and have a particular well defined relative phase. It can be seen that this produces an asymmetrical light intensity distribution whose main peak is somewhat offset from the axis.

In Figure 4 the first face 21 has a first piezo-electric transducer 41 extending over substantially its entire surface. The second face 22 has a second piezo-electric transducer 42 extending over substantially the entire surface. Electrical signals are applied to the transducers as before. In this embodiment, diffraction takes place in two directions simultaneously, as the incident light beam (not shown) interacts with acoustic waves produced by transducers 41 and 42 simultaneously, rather than sequentially as was the case with Figure 3. Operation is otherwise identical with Figure 3 and will not be described further.

In Figure 5 the first face 21 has first and second transducers 51, 52. The first transducer 51 is disposed adjacent to the first end face 23 and extends substantially across the entire width of the first face and one quarter of the axial length of the block 2. The second transducer 52 is disposed adjacent the first transducer and extends across substantially the entire width of the block and to approximately the midpoint of the block. The second face 22 has third and fourth transducers 53, 54. The fourth transducer 54 is disposed adjacent to the second end face 24 and extends substantially across the entire width and one quarter of the axial length of the second face. Third transducer 53 is disposed adjacent to fourth transducer 54 and extends across substantially the entire width of the block 2 from the fourth transducer to approximately the mid point of the block.

A beam of light 100 enters the block 2 by the first end face 23 and is diffracted in one plane by the acoustic waves at a first frequency produced by transducer 51. A diffracted beam is then further diffracted in the same plane by acoustic signals at the second frequency produced by transducer 52 to produce an intermediate diffracted beam. Intermediate beam is then diffracted in a second plane perpendicular to the one plane by acoustic waves at a third frequency produced by transducer 53, and is then further diffracted in the second plane by acoustic waves at a fourth frequency produced by transducer 54 to produce a divergent beam of light 102. A non-divergent beam of light 101 can also be produced by removing the drive signals to the transducers, thereby ceasing to produce acoustic waves in the block 2.

In Figure 6 a first face 21 has first and second piezo-electric transducers 61, 62, and a second face 22 has third and fourth piezo-electric transducers 63, 64. Each transducer respectively extends over substantially the entire width, and half the axial length, of its respective face. The first and third transducers 61, 63 are disposed adjacent a first end face 23, the second and fourth transducers 62, 64 are disposed adjacent a second end face 24. Respective signals at respective first, second, third and fourth frequencies are applied to respective transducers 61, 62, 63, 64. An input beam of light first undergoes diffraction into substantially perpendicular directions by interaction with acoustic waves produced by the first and third transducers 61, 63, and there undergoes further diffraction in two mutually perpendicular directions by interaction with acoustic waves produced by the second and fourth transducers 62, 64 to produce a divergent output beam 102. A non-divergent beam 101 can be produced by removing the drive signals to the transducers.

Figure 14 shows a further embodiment of the invention in which a single transducer 141 is used to generate a plurality of acoustic waves propagating in different directions. The transducer 141 is mounted on one face of a body 140 of a complex shape such that acoustic waves progressively undergo reflection at the faces of the body before becoming absorbed in an absorbing medium 142. The acoustic waves interact in the central region 143 with a beam of light passed through the body in a direction perpendicular to the plane of the figure.

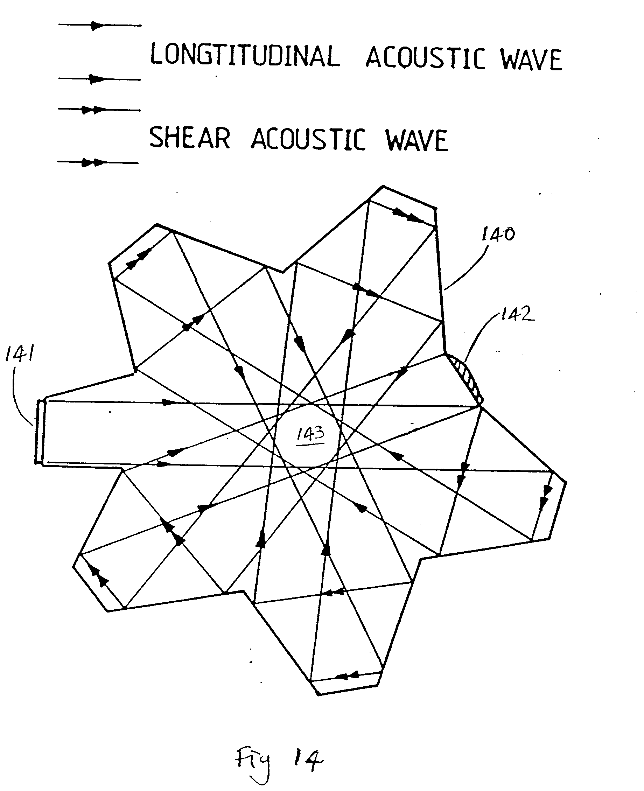

The application of the invention to a variable divergence laser apparatus will now be described. In Figure 13 a beam of light 100 from a laser 90 is applied to a beam diverger 1 in accordance with the invention. If a beam of large divergence 110 is required, signals from source 92 are coupled to the piezo-electric transducers of beam diverger 1 along line 93 in response to an enabling signal 91. If a non-diverging beam 120 is required, then the signal source 92 is disabled and no signals are applied to the beam diverger 1 along line 93. The input beam 100 then emerges an an output beam 120 having subtantially the same divergence as the input beam 100.

A number of modifications are possible within the scope of the invention. For example, the device can be selectively switched between divergence and non-divergence by applying or removing some or all the signals f1, f1′, f2, f2′. Thus the arrangement can provide either a non-diverging beam or a diverging beam at will or a beam which diverges in one plane only, and switching between modes of operation can be performed very rapidly indeed. This can be especially useful in laser radar/range finder applications where the device can be selectively switched substantially instantaneously between a wide-beam search mode and a narrow beam capture mode between successive pulses. It also allows a single laser source to be used for both the wide beam and the narrow beam generation.

It is also possible to obtain a beam of arbitrary divergence by applying suitable drive signals to the device. For example, by removing only signals f2, f2′ an intermediate degree of divergence as shown in Figures 7 and 8 may be obtained. This allows the device to operate in three modes: no divergence, narrow divergence, broad divergence.

In a modification of Figure 13, an optical laser amplifier 95 may be interposed between the laser 90 and diverger 1. This amplifier may be gated on and off in synchronism with the control signal 91 so as to provide output beams having different intensities as well as different degrees of divergence. For example, the apparatus may be switched between a divergent low power beam and a non-divergent high power beam.

While the invention has been illustrated with reference to a device having a rectangular cross section and pairs of acoustic frequencies whose wavefronts are substantially mutually perpendicular, the invention may also be performed with other geometries. In particular, the device may have a polygonal cross-section of any desired shape depending inter alia on the desired properties of the output beam, and the sets of acoustic waves need not be mutually perpendicular to one another.

Further, the invention is not restricted to the specific embodiments shown. For example, the invention may be preferred with transducers disposed in different positions on the acousto optic body from those shown in the figures. For example, while in Figure 5 transducers 51 and 52 are adjacent, and 53 and 54 are adjacent, transducers 52 and 53 can be axially displaced by one quarter the axial length of the body 2 such that the light beam sequentially undergos diffraction in alternate directions as it sequentially passes under the respective transducers 51, 53, 52, 54.

Further, while in the embodiments of Figures 3, 5 and 6, the transducers are shown as being disposed on a single block of acousto-optic material, the invention could equally well be performed by using a plurality of discrete blocks either butted together or spaced apart such that light emerging from one block enters the other, each block carrying one or more transducers.

Further, while in the embodiment of Figure 5, different frequencies are applied to transducers 51 and 52, the same frequencies could be applied to these transducers if only a relatively small divergence were required. Similarly for transducers 53 and 54, and for transducer pairs 61, 62 and 63, 64 of Figure 6.

Further, while in Figure 5, transducers 51 and 52 are on the same face, transducer 52 may be mounted on the opposite face from 51. It is only necessary that the wavefronts of the acoustic signals propagated by transducer 51 should be parallel to those propagated by 52. Similar comments apply to transducers 53 and 54, and to transducers 61, 62, 63, 64 of Figure 6.

The device may be constructed from any suitable materials. Particularly suitable materials are those whose crystal symmetry permits efficient acousto-optic diffraction in more than one plane. An example is the glass known as SF18 (trade mark) obtainable from Schott.

## Claims

1. An acousto-optic device comprising a material which is substantially transmissive to light, characterised in means (31,32) for propagating first and second acoustic signals through the material having wavefronts which are non-parallel to one another and such that the angular divergence of light (100) transmitted through the material is increased by an interaction with the acoustic signals.

2. An acousto-optic device as claimed in claim 1, characterised in that the angle between the wavefronts of the first and second acoustic signals is substantially a right angle.

3. An acousto-optic device as claimed in claim 1 or 2, characterised in that light (100) is transmitted along a path through the material and the material has respective first and second substantially planar surfaces (21,22) disposed substantially parallel to the light path the acoustic signals being coupled through the first and second surfaces.

4. An acousto-optic device as claimed in claim 1, 2 or 3, characterised in means for controlling the propagation of the first and second acoustic signals such that either one, or both, may be propagated.

5. An acousto-optic device as claimed in any one of the preceding claim characterised in that means for propagating acoustic signals comprises piezo-electric transducer means (31,32).

6. An acousto-optic device as claimed in claim 5, characterised in that the piezo-electric transducer means comprises first (31) and second (32) transducer means disposed on said first and second faces respectively.

7. An acousto-optic device as claimed in claim 6, characterised in that the first piezo-electric transducer means comprises a plurality of transducers (51,52).

8. An acousto-optic device as claimed in claim 6 or 7, characterised in that the second piezo-electric transducer means comprises a plurality of transducers.

9. An acousto-optic device as claimed in any one of claims 5 to 8, characterised in means (92) for selectively applying electric signals to said piezo-electric transducer means (31, 32 or 51, 52).

10. A beam diverger comprising an acousto-optic device according to any preceding claim characterised in that the first and second acoustic signals are such that an interaction takes place between them and a beam of light passed into the device, whereby the beam of light emerging from the diverger has a larger divergence than the beam of light entering the diverger.

11. A beam diverger as claimed in claim 10, characterised in that the acousto-optic interaction is represented by a parameter Q, as hereinbefore defined, of value 2 or less such that it operates close to, or in, the Raman Nath interaction region.

12. A beam diverger as claimed in claim 10 or 11, characterised in that a degree of divergence is adjustable by adjusting the acoustic signals.

13. A beam diverger as claimed in claim 12, characterised in that the relationship between the acoustic signals is such that the divergent beam of light emerging from the diverger is substantially continuous over a predetermined angular extent.

14. A beam diverger as claimed in any preceding claim, characterised in that the divergence of the divergent beam is different in different radial directions.

15. A beam diverger as claimed in claim 14, characterised in that the radial divergence in different directions is determined by the frequency relationship between the first and second acoustic signals.

16. A beam diverger as claimed in any one of claims 10 to 15, characterised in that the first acoustic signal comprises a plurality of discrete frequencies.

17. A beam diverger as claimed in any one of claims 10 to 16, characterised in that the second acoustic signal comprises a plurality of discrete frequencies.

18. A laser apparatus comprising a source of laser light, characterised in the provision of a beam diverger according to any one of claims 10 to 17, means for coupling a beam of light from said source into said beam diverger, and means for selecting the divergence of the beam diverger.

19. A laser apparatus as claimed in claim 18, characterised in that the means for coupling a beam of light comprises a selectively-enableable laser amplifier.

20. A laser apparatus as claimed in claim 19, characterised in that the laser amplifier is selectively enabled in conjunction with the means for selecting the divergence.

Fig 1

Fig 13

ACOUSTIC
WAVE

$\Lambda/4$

$\theta$

L

Fig 2

Fig 3

Fig 5

Fig 6

Fig 4

CONTOUR INTERVAL = 10%

H = LOCAL HIGH POINTS

L = LOCAL LOW POINTS

Fig 7

Fig 8

−2 mrad

−2 mrad

2 mrad

$\theta_y$

H

H

L

L

H

H

H

L

L

H

H

H

2 mrad

$\theta_x$

CONTOUR INTERVAL = 10%

H = LOCAL HIGH POINTS

L = LOCAL LOW POINTS

Fig 9

$\theta_y$

$\theta_x$

Fig 10

− 2 mrad

− 2 mrad

2 mrad
$\theta_y$

2 mrad

$\theta_x$

CONTOUR INTERVAL = 10%

H = LOCAL HIGH POINTS

L = LOCAL LOW POINTS

Fig 11

$\theta_y$

$\theta_x$

Fig 12

LONGTITUDINAL ACOUSTIC WAVE

SHEAR ACOUSTIC WAVE

Fig 14